# EUROPÄISCHE PATENTANMELDUNG

(11) **EP 4 810 431 A1**
(43) Veröffentlichungstag der Anmeldung: **23.09.2026**
(21) Anmeldenummer: 26163534.6
(22) Anmeldetag: 10.03.2026
(51) Int. Cl.: B66F 9/06, B66F 9/12, B66F 9/24, B66F 9/075

(54) **TRANSPORTVORRICHTUNG FÜR WENIGSTENS EINE SANITÄRE EINRICHTUNG FÜR EINE BAUSTELLE**

(30) Priorität: 17.03.2025 DE 202025101428 U
(71) Anmelder: Movasan GmbH, 26215 Wiefelstede (DE)
(72) Erfinder: WIENS, Vadim, 26215 Wiefelstede (DE)
(74) Vertreter: Jabbusch, Matthias

(57) **Zusammenfassung**

Bei einer Transportvorrichtung für wenigstens eine sanitäre Einrichtung für eine Baustelle, die nach Art eines Hubwagens ausgebildet ist und die einen elektrischen Fahrantrieb hat, ist vorgesehen, dass sie mit profilierten Antriebsrädern ausgerüstet ist und Anschlagmittel für Befestigungselemente für die sanitäre Einrichtung hat.

Diese Transportvorrichtung ist für den Transport von sanitären Einrichtungen für Baustellen geeignet.

## Beschreibung

Die Erfindung betrifft eine Transportvorrichtung für wenigstens eine sanitäre Einrichtung für eine Baustelle, die nach Art eines Hubwagens ausgebildet ist und die einen elektrischen Fahrantrieb hat.

Transportvorrichtung der eingangsgenannten Gattung sind grundsätzlich bekannt. Hubwagen werden zum Transport von Palletten, zum Transport von Gegenständen in vielfältiger Form eingesetzt. Sie können manuell getrieben und bedient werden, es sind aber auch schon mannigfaltig Transportvorrichtungen nach Art eines Hubwagens mit elektrischen Fahrantrieben vorgeschlagen worden.

Zumeist werden derartige Transportvorrichtungen in Hallen oder auf Betriebshöfen oder in Lastkraftwagen mit ebenen Böden eingesetzt. Wenn es aber darum geht, eine sanitäre Einrichtung für eine Baustelle zu transportieren, beispielsweise eine aus Kunststoff gefertigte Baustellentoilette, so soll dieser Transport möglichst bis zum Aufstellort der sanitären Einrichtung erfolgen. Dann ist häufig auf diesem Weg ein unwegsames Gelände in einer Baustelle zu überbrücken.

Der Erfindung liegt die Aufgabe zugrunde, eine Transportvorrichtung der eingangs gegangen Gattung aufzuzeigen, die für den Transport von sanitären Einrichtungen für Baustellen geeignet ist.

Diese Aufgabe ist erfindungsgemäß dadurch gelöst, dass die gattungsgemäße Transportvorrichtung mit profilierten Antriebsrädern ausgerüstet ist und Anschlagmittel für Befestigungselemente für die sanitäre Einrichtung hat.

Die Transportvorrichtung ist einerseits mit profilierten Antriebsrädern vorgesehen. Das Profil kann grobstollig ausgebildet sein, so dass ein Fahren über unwegsames Gelände insbesondere in einer Baustelle ermöglicht ist.

Weiterhin sind Anschlagmittel für Befestigungselemente für die sanitäre Einrichtung vorgesehen, mit denen vorteilhaft erreicht wird, dass die transportierte sanitäre Einrichtung lagefest an der Transportvorrichtung angeordnet wird, nämlich auch dann, wenn diese mit den profilierten Antriebsrädern über ein zum Beispiel welliges Gelände transportiert wird.

Mit der erfindungsgemäßen Transportvorrichtung gelingt eine Positionierung einer sanitären Einrichtung an schwer zugänglichen und zudem variierenden Orten direkt vor Ort.

Nach einer ersten Weiterbildung der Erfindung ist vorgesehen, dass die Antriebsräder jeweils einen Durchmesser größer als 20 cm haben. Mit einer derartigen Radgröße geht auch eine erhöhte Bodenfreiheit einher, so dass ein Überwinden von welligem Gelände erleichtert ist. Die Transportvorrichtung kann noch zwei weitere kleinere Räder aufweisen, damit sie über vier Räder sicher auf einem ebenen Untergrund stehen und verfahren werden kann. Die großen Antriebsräder ermöglichen aber auch den Betrieb der Transportvorrichtung in Form einer Sackkarre, so dass sie nur auf der Achse mit den Antriebsrädern transportiert wird und durch eine Bedienperson in einer die sanitäre Einrichtung sicher transportierenden Balance gehalten wird. Dazu weist die Transportvorrichtung Handgriffe auf.

Die vorgesehenen Anschlagmittel sind nach einer Weiterbildung vorzugsweise Durchbrechungen in Abschnitten der Transportvorrichtung. Es kann sich um Bohrungen oder auch Langlöcher handeln, in die Anschlagmittel eingehängt werden können. Werden als Anschlagmittel beispielsweise Zugriemen eingesetzt, so können diese an den Durchbrechungen in Abschnitten der Transportvorrichtung angeschlagen werden.

Eine nächste Weiterbildung der Erfindung sieht vor, dass die Transportvorrichtung ein Fahrwerk und eine höhenveränderbar anordbare Gabel aufweist, wobei der Gabel ein separater elektrischer Antrieb zugeordnet ist. Die Gabel kann unter Umständen vom elektrischen Fahrantrieb mitbedienbar sein. Diese Weiterbildung schlägt aber vor, dass für die Gabel ein separater elektrischer Antrieb eingesetzt wird. Dieser kann entsprechend hebestark ausgebildet sein, sodass die Gabel in die notwendige Höhe von beispielsweise einem Meter bewegbar ist.

Zur weiteren Ausbildung der Erfindung kann noch vorgesehen sein, dass die Gabel aus Edelstahl gefertigt ist. Diese ist widerstandsfähig gegenüber Witterungseinflüssen und mechanischen Einflüssen. Um diese Eigenschaften noch zu erhöhen, kann weiter vorgesehen sein, dass der Edelstahl der Gabel gebeizt ist.

Ein Ausführungsbeispiel der Erfindung ist in der Zeichnung dargestellt. Es zeigen:
- Figur 1:: eine erste Seitenansicht einer erfindungsgemäßen Transportvorrichtung für wenigstens eine sanitäre Einrichtung für eine Baustelle,
- Figur 2:: eine zweite Seitenansicht der Vorrichtung gemäß Figur 1 und
- Figur 3:: eine Draufsicht auf die Vorrichtung nach Figur 1.

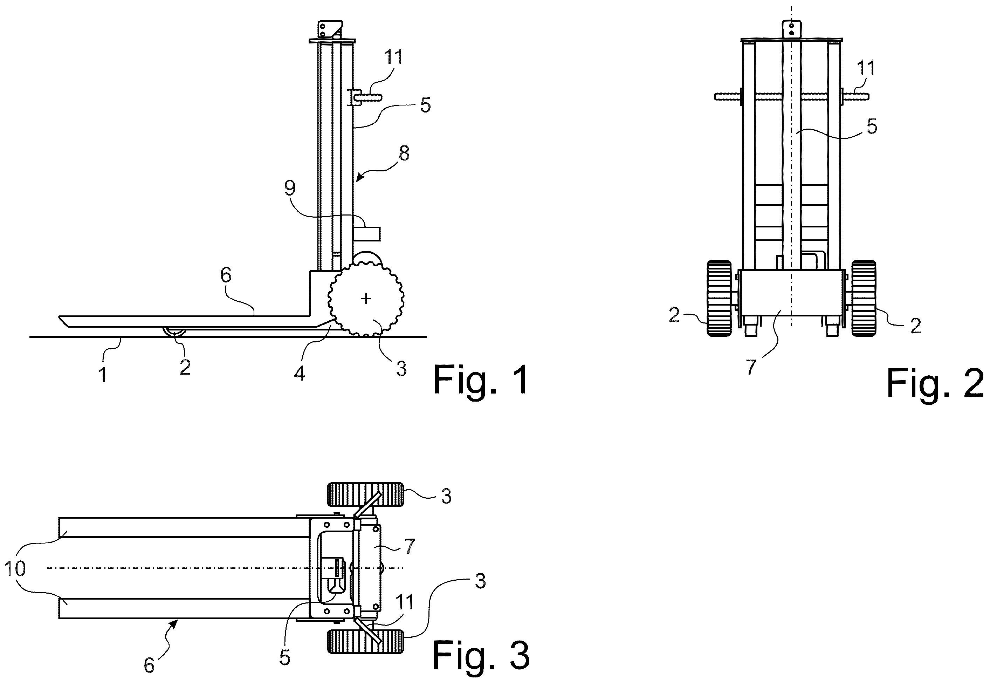

Die Transportvorrichtung in Figur 1 ist nach Art eines Hubwagens ausgebildet, sie steht über Räder 2, 3 auf einem Boden 1 auf. Die Räder 2,3 sind an einem Chassis 4 drehbar aufgenommen, das Chassis 4 trägt eine Tragsäule 5. An dieser Tragsäule 5 ist eine Gabel 6 höhenveränderbar angeordnet. Zudem sind an der Säule 5 Handgriffe 11 angeordnet.

Das Rad 3 weist einen Durchmesser größer 20 cm auf, es ist profiliert ausgebildet. Das Rad 3 steht dabei mit einem elektrischen Antrieb in einem Gehäuse 7 (Figur 2) in Wirkverbindung. Für den Antrieb ist an der Tragsäule 5 eine Steuerung 8 vorgesehen, weiterhin trägt die Tragsäule 5 in einem Fach einen Akkumulator 9 für den elektrischen Antrieb.

Figur 2 zeigt beide Räder 2, sie sind als Antriebsräder über entsprechende Wellen mit dem im Gehäuse 7 angeordneten Antrieb verbunden.

Figur 3 zeigt, dass die Gabel 6 zwei Gabelzinken 10 hat.

## Patentansprüche

1. Transportvorrichtung für wenigstens eine sanitäre Einrichtung für eine Baustelle, die nach Art eines Hubwagens ausgebildet ist und die einen elektrischen Fahrantrieb hat,
**dadurch gekennzeichnet,**
**dass** sie mit profilierten Antriebsrädern (3) ausgerüstet ist und Anschlagmittel für Befestigungselemente für die sanitäre Einrichtung hat.

2. Transportvorrichtung nach Anspruch 1, **dadurch gekennzeichnet, dass** die Antriebsräder (3) jeweils einen Durchmesser größer als 20 cm haben.

3. Transportvorrichtung nach Anspruch 1 oder 2, **dadurch gekennzeichnet, dass** die Anschlagmittel Durchbrechungen in Abschnitten der Transportvorrichtung sind.

4. Transportvorrichtung nach einem der vorhergehenden Ansprüche, **dadurch gekennzeichnet, dass** sie ein Fahrwerk (4) und eine höhenveränderbar anordbare Gabel (6) aufweist, wobei der Gabel (6) ein separater elektrischer Antrieb zugeordnet ist.

5. Transportvorrichtung nach Anspruch 4, **dadurch gekennzeichnet, dass** die Gabel (6) aus Edelstahl gefertigt ist.

6. Transportvorrichtung nach Anspruch 5, **dadurch gekennzeichnet, dass** der Edelstahl der Gabel (6) gebeizt ist.
